# EUROPÄISCHE PATENTSCHRIFT

(11) **EP 2 230 150 B1**
(45) Veröffentlichungstag und Bekanntmachung des Hinweises auf die Patenterteilung: **30.09.2015**
(21) Anmeldenummer: 10002864.6
(22) Anmeldetag: 18.03.2010
(51) Int. Cl.: B62B 3/04, B62B 3/14

(54) **Schubgepäckwagen mit Gepäcksicherung**
Push luggage cart with luggage retainer
Chariot à bagage doté d'un arrêt de bagage

(30) Priorität: 18.03.2009 DE 102009013448
(43) Veröffentlichungstag der Anmeldung: 22.09.2010
(73) Patentinhaber: EXPRESSO DEUTSCHLAND GMBH, 34123 Kassel (DE)
(72) Erfinder: Vellmer, Uwe, 37276 Meinhard (DE)
(74) Vertreter: Prünte, Peter

(56) Entgegenhaltungen:
- DE-A1- 10 234 254
- DE-A1-102007 004 544
- DE-U1- 20 302 677

## Beschreibung

Gegenstand der Erfindung ist ein Schubgepäckwagen, wie er üblicher Weise auf Flughäfen und Bahnhöfen verwendet wird.

Solche Schubgepäckwagen bestehen aus einem mit Rädern versehenen Gestell, mit einer Ladefläche zum Aufstellen von Gepäckstücken, und einem am hinteren Ende angeordneten aufragenden Griffbügel zum Schieben des Schubgepäckwagens durch den Benutzer.

Bei solchen Schubgepäckwagen besteht das Problem, dass sie, mit Gepäck beladen, oftmals zwischen Abfertigungsgebäude oder Empfangsgebäude und Parkplätzen über mitunter holprige oder gepflasterte oder sonst unebene Wege gefahren und gelegentlich über Schwellen, Bordsteine oder Rampen bewegt werden müssen, oder dass sie in Flughafengebäuden oder Parkhäusern über Rolltreppen oder Rollbänder befördert werden müssen. Bei Rolltreppen oder auch bei in Flughafengebäuden üblichen Rollstegen zur Überwindung längerer Wege durch Passagiere besteht bei Abwärtsfahrt, wo der Schubgepäckwagen nach vorne mehr oder weniger stark geneigt steht, immer die Gefahr, dass das Gepäck von der Ladefläche herunterrutscht und herunterfällt. Bei unebenen Wegen besteht beim Fahren das Problem, dass durch die durch Unebenheiten verursachten Rüttelbewegungen des Schubgepäckwagens das Gepäck nach vorne oder seitlich herunterrutscht und schließlich herunterfällt, und die Gefahr des Herunterrutschens nach vorne besteht insbesondere auch dann, wenn Verwerfungen, Schwellen oder ähnliche Hindernisse den in Fahrt befindlichen Schubgepäckwagen plötzlich stoppen und deshalb das Gepäck nach vorne herunterfällt.

Bisher sind verschiedene Möglichkeiten bekannt, das Herabrutschen von Gegenständen über das vordere Wagenende zu vermeiden.

Aus der DE 102 34 254 A1 ist ein Baumarkt-Einkaufswagen bekannt, in dessen plattenförmigen Wagenboden am vorderen Ende eine quer verlaufende, in die Bodenplatte versenkbare und federnd in eine hochgeklappte Arbeitsstellung schwenkbare Anschlagleiste vorgesehen ist.

Aus der DE 203 02 677 U1 auf deren Gegenstand sich der Oberbegriff des Anspruchs 1 bezieht, ist ein Gepäcktransportwagen bekannt, an dessen vorderem Wagenende ein durch eine Gasfeder in eine aufrechte Arbeitsstellung vorgespannter Anschlagbügel 11 vorgesehen ist, der ein Herabrutschen von Gepäckstücken über das vordere Wagenende verhindert, und der nach hinten in eine am Wagenboden etwa anliegende oder nach rückwärts geneigte Stellung schwenkbar ist, um das Ineinanderstapeln des Wagens mit gleichen Wagen zu ermöglichen.

Aus der DE 10 2007 004 544 A1 ist es bei einem Baumarkt-Einkaufswagen bekannt, am vorderen Ende einer Ladeplattform federnd in eine etwas über die Ladeplattform ragende Stellung vorgespannte Bügelschenkel vorzusehen, um ein seitliches Abrutschen von Gegenständen wie Zementsäcke oder Blumenerdesäcke zu vermeiden.

Aufgabe der Erfindung ist es, den oben genannten Problemen weitergehend abzuhelfen.

Erfindungsgemäß ist daher der Schubgepäckwagen mit einer Einrichtung zur Gepäcksicherung versehen. Diese Gepäcksicherungseinrichtung besteht aus einem in vorderen Bereich des Schubgepäckwagens angeordneten Rückhalteorgan, das durch Federdruck nach rückwärts gegen das Gepäck drückt, so dass dieses mit Vorspannung gehalten wird bzw. gegen die rückwärtige, durch eine Platte oder Gitterstäbe oder dergleichen gebildete Rückwand des Schubgepäckwagens gedrängt wird.

Eine mögliche Ausführungsform ist in den anliegenden Zeichnungen dargestellt. Darin zeigt:

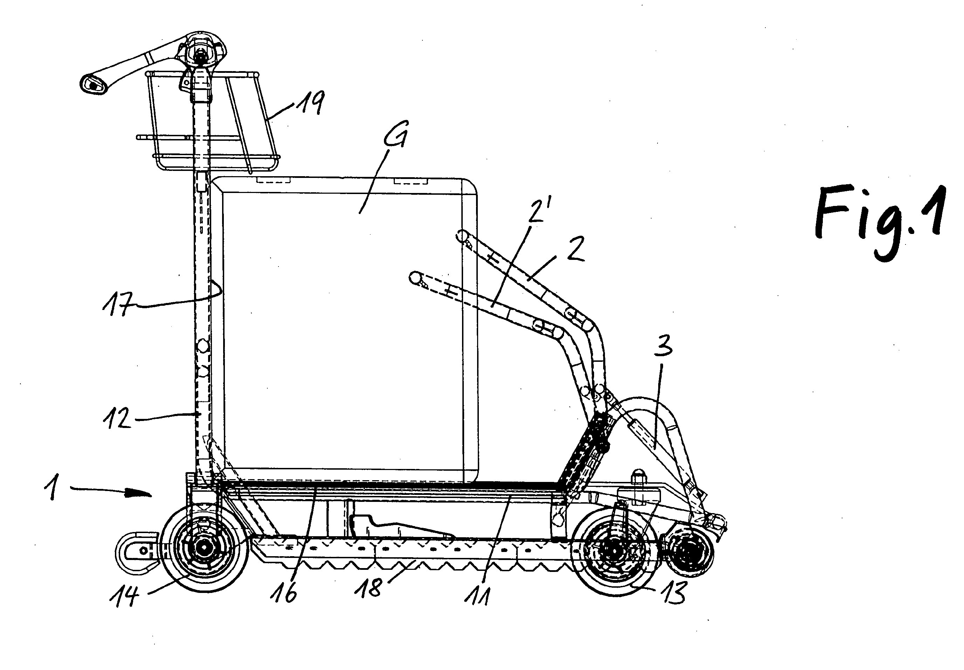

- Fig. 1: eine Seitenansicht, und

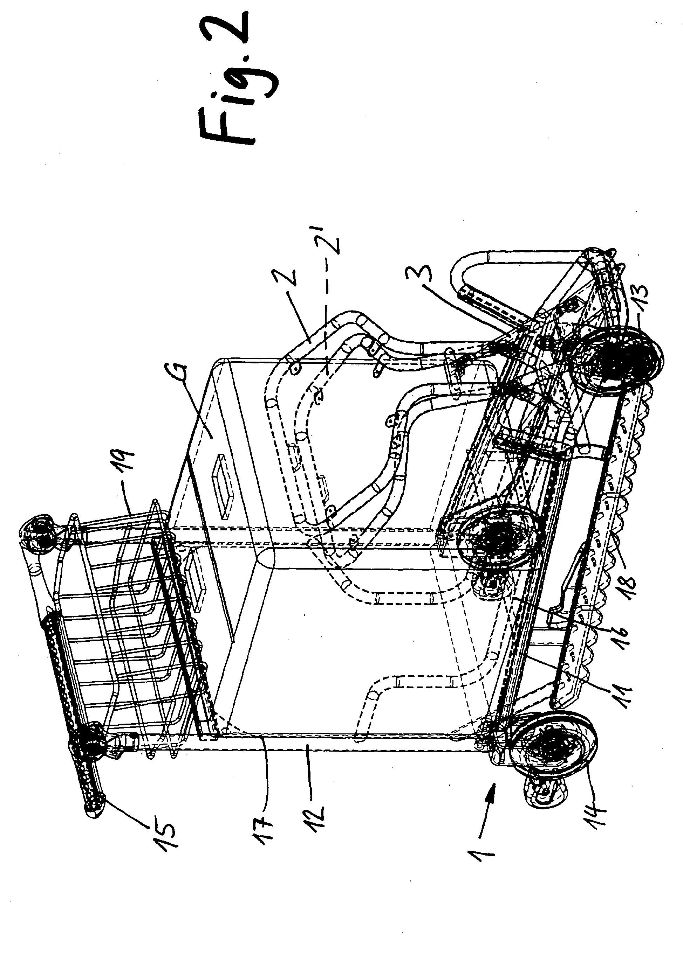

- Fig. 2: eine perspektivische Ansicht eines solchen Schubgepäckwagens.

Gemäß den Zeichnungen besteht der Schubgepäckwagen in üblicher Weise aus einem Gestell 1 mit einem unteren, etwa horizontalen Gestellteil 11 und einem rückwärtigen aufragenden Gestellteil 12, weiter mit am unteren Gestellteil 11 angeordneten schwenkbaren vorderen Rädern 13 und hinteren Rädern 14, sowie einem am oberen Ende des hinteren aufragenden Gestellteils 12 angeordneten Griffbügel 15.

Der untere, etwa horizontale Gestellteil 11 ist mit einer Gepäckauflagefläche 16 ausgebildet, die durch eine Platte oder durch ein aus Stäben oder dergleichen gebildetes Gitter gebildet sein kann, und der hintere aufragende Rahmenteil 12 bildet eine Rückwand 17, die wiederum durch eine Platte oder durch Streben oder Gitterstäbe gebildet sein kann, um ein Herunterfallen von Gepäckstücken nach hinten zu unterbinden.

Der Griffbügel 15, der zum Schieben des Schubgepäckwagens dient, ist in bekannter Weise mit einem Bremsmechanismus verbunden, der auf die hinteren Räder 14 wirkt, dessen Einzelheiten aber nicht dargestellt sind. Weiter hat der Schubgepäckwagen eine unten an seinem unteren Gestellteil 11 angeordnete übliche Treppensicherung 18. Im rückwärtigen aufragenden Gestellteil 12 ist außerdem oberhalb der bereits erwähnten Rückwand 17 ein Gitterkorb 19 für kleine Gepäckstücke oder Utensilien angebracht.

In den beiden Zeichnungsfiguren ist auch jeweils ein Gepäckblock G auf den Schubgepäckwagen aufgestellt gezeigt. Dieser steht auf der Gepäckauflagefläche 16 und lehnt sich hinten an der Rückwand 17 an.

Erfindungsgemäß ist der dargestellte Schubgepäckwagen mit einer Gepäcksicherungsvorrichtung versehen. Diese ist im vorderen Bereich des Wagens angeordnet und besteht beim Ausführungsbeispiel aus einem Sicherungsbügel 2, der von einer Gasdruckfeder 3 mit einer Spannkraft beaufschlagt wird, die den Sicherungsbügel 2 nach rückwärts zu schwenken sucht und damit den Sicherungsbügel 2 gegen die Vorderseite des Gepäckblocks G drängt, der sich auf dem Wagen befindet, also gegen die Vorderseite des einzigen oder des vordersten von mehreren auf dem Wagen stehenden Gepäckstücken drückt.

Der als Klappbügel ausgebildete Sicherungsbügel 2 hat eine Grundstellung, die in beiden Zeichnungsfiguren eingezeichnet und mit 2' bezeichnet ist. Diese verkörpert die hinterste Stellung des Sicherungsbügels 2 und wird durch einen Anschlag oder die maximale Ausdehnung der Gasdruckfeder 3 realisiert. Zum Aufstellen von Gepäckstücken auf den Wagen wird der Sicherungsbügel 2 einfach manuell nach vorne geschwenkt, und die Gasdruckfeder 3 spannt ihn dann gegen die Gepäckstücke vor.

Bei dem dargestellten Ausführungsbeispiel ist der Sicherungsbügel 2 als Rahmen ausgebildet, an welchem den Darstellungen mehrere Halteösen 21 angebracht sind, die in den vom Rahmen umschlossenen Raum ragen und das Anbringen einer Platte (nicht dargestellt) ermöglichen, die beispielsweise als Werbeträger dienen kann.

Statt der dargestellten Gasdruckfeder 3 kann natürlich auch irgendein anderer geeigneter Vorspannmechanismus, also beispielsweise irgendeine mechanische Federanordnung Verwendung finden.

Es kann auch vorgesehen sein, den Sicherungsbügel 4 nach vorne in eine durch eine Arretierung gesicherte oder auf andere Weise stabile Position schwenken zu können, in der er nicht festgehalten werden muß, um Gepäckstücke aufzustellen, und danach manuell wieder etwas nach hinten geschwenkt werden kann, um in die Arbeitsstellung gebracht zu werden, in welche er gegen die Gepäckstücke drückt und diese sichert. Eine ohne Arretierung gesicherte vordere Stellung des Sicherungsbügels kann beispielsweise erreicht werden, wenn der Federmechanismus als Kippsprungwerk ausgebildet wird.

Dass das Gepäcksicherungsorgan, das beim Ausfiihrungsbeispiel als Sicherungsbügel 2 ausgebildet ist, in irgendeiner anderen Weise ausgebildet sein kann, versteht sich von selbst.

## Patentansprüche

1. Schubgepäckwagen, bestehend aus einem mit Rädern (13, 14) versehenen Gestell (1, 11, 12) mit einer Gepäckaufstandsfläche (16) und einer rückwärtigen Gepäckabstützung (16), wobei am vorderen Bereich des Schubgepäckwagens eine Gepäcksicherungsvorrichtung (2, 3) zur Sicherung eines Abrutschens von auf der Gepäckaufstandsfläche (16) aufgestellten Gepäck nach vorne vorgesehen ist, die ein Sicherungsorgan (2) aufweist, welches in Anlage an eine nach vorne weisende Fläche eines aufgestellten oder des vordersten von mehreren aufgestellten Gepäckstücken bringbar ist und **dadurch gekennzeichnet, dass** die Gepäcksicherungsvorrichtung ein Vorspannorgan (3) umfasst, welches das Gepäcksicherungsorgan federelastisch gegen das Gepäck vorspannt.

2. Schubgepäckwagen nach Anspruch 1, wobei das Sicherungsorgan (2) ein schwenkbarer Arm oder Bügel ist.

3. Schubgepäckwagen nach Anspruch 1 oder 2, wobei das Vorspannorgan (3) als Gasfeder oder mechanische Federanordnung ausgebildet ist.

4. Schubgepäckwagen nach einem der Ansprüche 1 bis 3, wobei das Sicherungsorgan (2) eine durch einen Anschlag oder dergleichen begrenzte hinterste Stellung hat.

5. Schubgepäckwagen nach einem der Ansprüche 1 bis 4, wobei das Sicherungsorgan (2) zum Aufstellen des Gepäckstücks oder der Gepäckstücke in eine durch eine Arretierung gesicherte oder anderweitig stabile vordere Stellung bringbar ist.

6. Schubgepäckwagen nach Anspruch 5, wobei das Vorspannorgan ein Kippsprungfederwerk ist und dieses das Sicherungsorgan (2) in seiner vorderen Stellung stabil hält.

## Claims

1. A push luggage cart consisting of a frame (1, 11, 12) provided with wheels (13, 14), with a luggage support surface (16) and a rear luggage support (16),
wherein a luggage retaining device (2, 3) is provided in the forward area of the push luggage cart in order to retain the luggage placed on the luggage support surface (16) and prevent it from slipping off towards the front, the retaining device comprising a retaining means (2) which can be brought into contact with a forward facing surface of one or of the most forward luggage item of several deposited luggage items, and **characterised in that** the luggage retaining device comprises a tensioning means (3) which biases the luggage retaining means in a spring-elastic manner against the luggage.

2. The push luggage cart according to claim 1, wherein the retaining means (2) is a swivelling arm or clamp.

3. The push luggage cart according to claim 1 or 2, wherein the tensioning means (3) is configured as a pneumatic spring or mechanical spring arrangement.

4. The push luggage cart according to one of claims 1 to 3, wherein the retaining means (2) has a rearmost position limited by a stop or the like.

5. The push luggage cart according to one of claims 1 to 4, wherein the retaining means (2) for positioning one or more items of luggage can be brought into a stable forward position secured by a locking mechanism or similar.

6. The push luggage cart according to claim 5, wherein the tensioning means is a tilt-jump spring mechanism, and wherein the tilt-jump mechanism secures the retaining means (2) in a stable manner in its forward position.

## Revendications

1. Chariot à bagages, constitué d'un châssis (1, 11, 12) muni de roues (13, 14), avec une surface de dépose (16) des bagages et un soutien (16) de bagages arrière,
dans la région avant du chariot à bagages étant prévu un dispositif de blocage (2, 3) des bagages pour assurer le blocage contre un glissement vers l'avant de bagages posés sur la surface de dépose (16) des bagages qui comporte un élément de blocage (2), lequel peut être amené en appui contre une surface dirigée vers l'avant d'une pièce de bagage ou de la première pièce de bagages des plusieurs qui sont posées et **caractérisé en ce que** le dispositif de blocage (2, 3) des bagages comprend un élément de précontrainte (3) qui précontraint l'élément de blocage des bagages de manière résiliente contre les bagages.

2. Chariot à bagages selon la revendication 1, l'élément de blocage (2) étant un bras ou un étrier pivotant.

3. Chariot à bagages selon la revendication 1 ou 2, l'élément de précontrainte (3) étant conçu en tant que vérin à gaz ou en tant que dispositif mécanique à ressorts.

4. Chariot à bagages selon l'une quelconque des revendications 1 à 3, l'élément de blocage (2) ayant une position arrière extrême limitée par une butée ou similaires.

5. Chariot à bagages selon l'une quelconque des revendications 1 à 4, pour poser la pièce de bagage ou les pièces de bagage, l'élément de blocage (2) pouvant être amené dans une position avant stable bloquée par un arrêt ou autre.

6. Chariot à bagages selon la revendication 5, l'élément de précontrainte étant un ressort de basculement à boudin et ce dernier maintenant de manière stable l'élément de blocage (2) dans sa position avant.
